# EUROPEAN PATENT APPLICATION

(11) **EP 4 053 776 A1**
(43) Date of publication of application: **07.09.2022**
(21) Application number: 20881976.3
(22) Date of filing: 30.10.2020
(51) Int. Cl.: G06Q 40/06, G06Q 20/06, G06Q 20/36, G06Q 50/18

(54) **BLOCKCHAIN-BASED PATENT VALUE CHAIN PLATFORM AND CROWDFUNDING SERVICE METHOD USING SAME**

(30) Priority: 30.10.2019 KR 20190136719
(71) Applicant: Lee, Sung Yong, Dobong-gu Seoul 01399 (KR)
(72) Inventor: Lee, Sung Yong, Dobong-gu Seoul 01399 (KR)
(74) Representative: Lichti - Patentanwälte Partnerschaft mbB
(86) International application number: PCT/KR2020/014992
(87) International publication number: WO 2021/086095

(57) **Abstract**

Provided is the present invention relating to a blockchain-based patent value chain platform and a crowdfunding service method using the platform, the blockchain-based patent value chain platform, comprising: a blockchain unit comprising: a membership certification part configured to treat admission and certification of the patentee and the investor as members, and function to form an electronic wallet; a general-purpose electronic coin issuance part configured to issue a general-purpose electronic coin which can be traded in an electronic money exchange bureau and can be used in a scope of all the business carried out in the patent value coin platform; and a patent value coin issuance part configured to issue a value coin that is intended for securing a right and value owned by the patentee and investor and can be used for the right and value only when crowdfunding is performed in the patent value chain platform; and a funding service unit comprising: a patent art provision part configured to quantify value of a patent art, thereby calculating an amount of money corresponding to the quantifying value; a funding channel management part configured to connect the investor and the patentee with each other, cause them to hold mutual information in common, and provide a code corresponding to the patent art; and a service promotion management part configured to provide the patentee and the investor of a funding channel with various service promotions.

## Description

### Technical Field

The present invention relates to a blockchain-based patent value chain platform, and more particularly, to a blockchain-based patent value chain platform intended for providing a platform that connects a patentee and an investor with each other and forms a value chain suitable to value of a patent value based on a blockchain, and a crowd funding service method using the platform.

### Background Art

Cooperation between one having a technology and one having a capital has aroused a national interest in the light of the fact that an innovation resulting from the cooperation can lead to the creation of national wealth. Even though this cooperation has been carried out through a technical transaction or licensing, the investment of capitals, and so on, cases of its success are not rich really.

Furthermore, a small and medium-sized enterprise or a venture business, a start-up, and a rightful person that are in financial difficulties may have a burden technically and economically even when performing actual affairs to be prepared before the foundation of an enterprise. A small-income owner having a right actually undergoes a lot of trials and errors due to the lack of experience and the deficiency of specialty because he or she must carry out actual affairs with self-proof and preparation by his or her own efforts. After barely spending much time and a great expense, he or she has no choice but to despair at a real condition that the effective period of acquisitive prescription is cut in half. Since this process sometime becomes a structural cause that an intellectual property right should be abandoned, going on with professional and rapid preparatory works before starting up a business is regarded as furnishing a key for success to realize commercialization of the intellectual property right.

Thus, it can be preferable to perform the evaluation of technical propriety based on data resulting from the evaluation of a prior patent corresponding to an idea technology and data resulting from analyzing a technical tendency, and to realization industrialization for the technology based on the result data.

In order to go on with technical industrialization of the idea technology, it has been required to prepare a crowdfunding platform for providing more systematical and flexible business support.

Crowdfunding means receiving funding from a crowd, and also means that a person, a group, or an enterprise that is in need of funds collects the funds from many and unspecified persons using a web, a mobile network, or so on, and a system and method for this crowdfunding have ever been announced a number of times.

Meanwhile, in the recent, transactions for cryptocurrency have actively been performed, and even though the transactions for the cryptocurrency are regarded as being performed in a manner similar to that of performing transactions for stocks, it is possible to conveniently trade it because the transactions for the cryptocurrency can be carried out without a limitation of time, and the cryptocurrency can be exchanged into cash in real time through a simple procedure.

Furthermore, no custody fee is required because information on the cryptocurrency is saved in a computer hard disk and so on, and it is advantageous in that there is an excellent function as a value storage medium because it is not necessary to worry about a robbery and loss, and in that it is impossible to hack the information because the advantages of blockchain-based technologies are used.

Therefore, in order to carry out the technical industrialization of an idea technology, a patent value chain platform has been suggested, which is intended for taking charge of the industrialization of a patent art and a technology derived from an intellectual property idea on the whole by internally utilizing an electronic coin suitable to value limited to a right and value between a patentee and an investor on the basis of general-purpose electronic money for public relations and advertisements, and marketing throughout the world. The general-purpose electronic money mentioned herein means electronic money or an electronic coin issued from the patent value chain platform.

With respect to a conventional art connected with the aforesaid contents, the art relating to a crowdfunding system has been well-known through Korean Laid-Open Patent Publication No. 10-2014-0048524 (April 24, 2014).

However, the crowdfunding system comprises a system server and user terminals that are connected through a network, wherein a large number of users access the system server through the user terminals, and further comprises a customer database including information on customers, and a room database including information on a channel provided from the system server, wherein a charging module of the system server charges an amount fixed by a user for funding to the user, and functions to assign a service certificate in a level corresponding to the amount cost charged to the user, thereby notifying the user of it via online.

However, a main technique of the well-known art is configured in such a manner that the charging module of the system server charges an amount fixed by the user for funding through the user terminal or predetermined by the system server to the user, and transfers the service certificate, which shows the fact that he or she can use at least one of service items pre-registered in a database for service list of the system server, to the user terminal, this technique being distinguished from the present invention that provides a patent value chain platform intended for taking charge of the industrialization of a patent art and a technology derived from an intellectual idea on the whole by internally utilizing a value coin limited to a right and value between a patentee and an inventor on the basis of general-purpose electronic money based on a blockchain required for public relations, advertisement, and marketing throughout the world.

### Detailed Description of the Invention

### Technical Problem

The present invention has been derived for solving the aforesaid problems of the conventional art, and an object of the present invention is to provide a patent value chain platform and a crowdfunding service method using the same that are intended for connecting a patentee and an investor with each other and intermediating the industrialization of a patent art and a technology derived from an intellectual property idea by utilizing a value coin limited to a right and value owned by the patentee and the investor on the basis of blockchain-based and general-purpose electronic money.

### Solution for Solving the Problem

In order to solve the technical problem as described above, the present invention provides a patent value chain platform, which connects a patentee and an investor with each other and provides a crowdfunding service based on a blockchain, comprising: a blockchain unit comprising: a membership certification part configured to treat admission and certification of the patentee and the investor as members, and function to form an electronic wallet; a general-purpose electronic coin issuance part configured to issue a general-purpose electronic coin that can be traded through an electronic money exchange bureau and can be used in a scope of all the business carried out in the patent value coin platform; and a patent value coin issuance part configured to issue a value coin that is intended for securing a right and value owned by the patentee and investor and can be used for the right and value only when crowdfunding is performed in the patent value chain platform; and a funding service unit comprising: a patent art provision part configured to quantify value of a patent art, thereby calculating an amount of money corresponding to the quantifying value; a funding channel management part configured to connect the investor and the patentee with each other, cause them to hold mutual information in common, and provide a code corresponding to the patent art; and a service promotion management part configured to provide the patentee and the investor of a funding channel with various service promotions.

Furthermore, in order to solve the technical problem, the present invention provides a blockchain-based crowdfunding service method, comprising: a first step of treating the admission and certification of a patentee as a member and registering a patent art; a second step of furnishing the patentee with a value coin according to information on value evaluation and a schedule for development project (i.e., a merchandising) of the patent art through a patent value coin issuance part; a third step of holding patent art information in common over a network, the information including information on a scale of the lowest amount of money required for embodying the patent art of the patentee, and the information on value evaluation, and information on the schedule for development project; a fourth step of collecting an investor having an interest in the patent art and setting up a funding channel between the investor and the patentee; a fifth step of receiving, as an investment, currency corresponding to an amount of funding in the form of a general-purpose electronic coin through the funding channel from the investor; a sixth step of saving the general-purpose electronic coin furnished from the investor in a general-purpose electronic coin issuance part, and furnishing the investor with value corresponding to a fixed rate according to each amount of the general-purpose electronic coin furnished from the investor in the form of a value coin through the patent value coin issuance part; a seventh step of furnishing the patentee with a commission for success at a fixed rate according to an amount of money resulting from value evaluation on the patent art in the form of a general-purpose electronic coin and a value coin through a blockchain unit after completion of funding of the patent art; and an eighth step of furnishing the investor with a commission for the success of industrialization corresponding to a fixed rate of an amount invested by the investor in the form of a general-purse electronic coin and a value coin through the blockchain unit after completion of the industrialization of the patent art.

### Effect of the Invention

According to the block chain-based patent value chain platform and the crowd funding service method using the same which are mentioned above, thanks to the patent value chain platform that takes charge of the industrialization of a patent art and a technology derived from an intellectual property idea as a whole, it is effective to smoothly plan industrialization of the patent art owned by a patentee and to certainly recompense an investor for a right and value resulting from the industrialization of the patent.

Also, according to the present invention, it is effective to use foreign investments as a means for marketing in order to get rid of a technical and economic burden imposed on a small and medium-sized enterprise or a venture business, a start-up, and a rightful person that are in financial difficulties concerning a relevant patent right, and in order to obtain a profit as much as value.

### Brief Description of the Drawings

FIG. 1 is a block diagram showing the constitutions of a blockchain-based patent value chain platform according to an exemplary embodiment of the present invention.
FIG. 2 is an exemplary view for explaining a relation between a value coin and a general-purpose electronic coin for a right and value traded in the blockchain-based patent value chain platform according to the exemplary embodiment of the present invention.
FIG. 3 is a flow chart showing a crowdfunding service method used by the blockchain-based patent value chain platform according to another exemplary embodiment of the present invention.

### Best Mode for Carrying Out the Invention

According to one exemplary embodiment of the present invention, a blockchain-based patent value chain platform, which connects patentee and an investor with each other and provides a blockchain-based crowdfunding service, comprises: a blockchain unit comprising: a membership certification part configured to treat admission and certification of the patentee and the investor as members, and function to form an electronic wallet; an electronic coin issuance part configured to issue a general-purpose electronic coin which can be traded through an electronic currency exchange bureau and can be used in a scope of all the business carried out in the patent value coin platform; and a patent value coin issuance part configured to issue a value coin that is intended for securing a right and value owned by the patentee and investor and can be used for the right and value only when crowdfunding is performed in the patent value chain platform; and a funding service unit comprising: a patent art provision part configured to quantify value of a patent art, thereby calculating an amount of money corresponding to the quantifying value; a funding channel management part configured to connect the investor and the patentee with each other, cause them to hold mutual information in common, and provide a code corresponding to the patent art; and a service promotion management part configured to provide the patentee and the investor of a funding channel with various service promotions.

According to another exemplary embodiment of the present invention, a crowdfunding service method, which is used by a blockchain-based patent value chain platform, comprises: a first step of treating the admission and certification of a patentee as a member and registering a patent art; a second step of furnishing the patentee with a value coin suitable to a right and value according to information on value evaluation and a schedule for development project (i.e., a merchandising) of the patent art through a patent value coin issuance part; a third step of holding patent art information in common over a network, the information including information on a scale of the lowest amount of money required for embodying the patent art of the patentee, and the information on value evaluation, and information on the schedule for development project; a fourth step of collecting the investor having an interest in the patent art and setting up a funding channel between the investor and the patentee; a fifth step of receiving, as an investment, currency corresponding to an amount of funding in the form of a general-purpose electronic coin through the funding channel from the investor; a sixth step of saving the general-purpose electronic coin furnished from the investor into a general-purpose electronic coin issuance part, and furnishing the investor with value corresponding to a fixed rate according to each amount of the general-purpose electronic coin furnished from the investor in the form of a value coin through the patent value coin issuance part; a seventh step of furnishing the patentee with a commission for the success of funding at a fixed rate according to an amount of money resulting from value evaluation on the patent art in the form of a general-purpose electronic coin and a value coin through the blockchain unit after completion of funding of the patent art; and an eighth step of furnishing the investor with a commission for the success of industrialization corresponding to a fixed rate of an amount invested by the investor in the form of a general-purse electronic coin and a value coin through the blockchain unit after completion of the industrialization of the patent art.

### Mode for Carrying Out the Invention

The terms or words used in the present specification and claims should not be construed as being limiting to general or lexical meanings, but should be construed as having meanings and concepts that are coincident with a technical idea of the present invention on the ground of a fundamental rule that an inventor can appropriately define concepts of the terms for explaining his or her invention in the best way.

Accordingly, since exemplary embodiments described in the present specification, and the constitutions illustrated in the drawings are only the most preferable examples of the present invention and are not regarded as completely speaking the technical idea of the present invention, it should be understood that various equivalents and modifications which can be substituted for them may exist.

Hereinafter the preferable exemplary embodiments of the present invention will be described in detail with reference to the accompanying drawings.

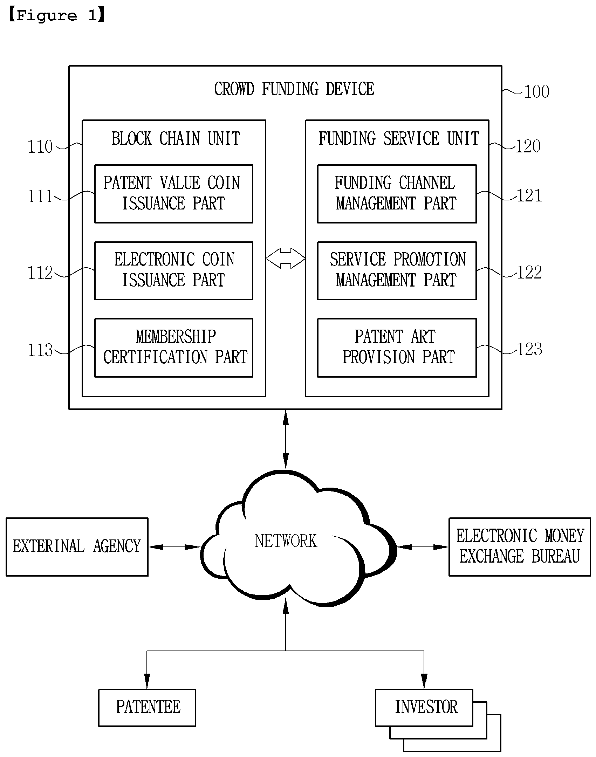

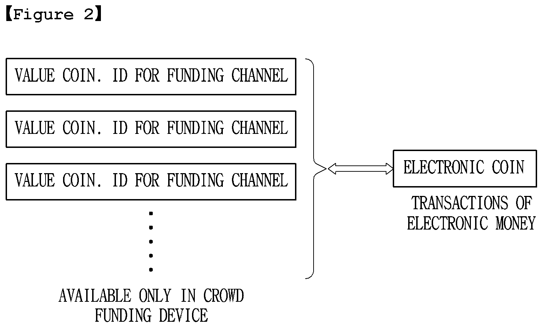

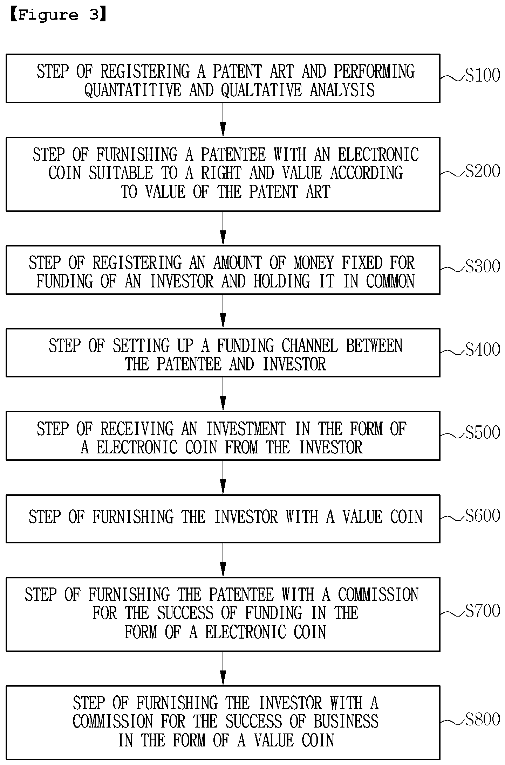

FIG. 1 is a block diagram showing the constitutions of a blockchain-based patent value chain platform according to an exemplary embodiment of the present invention, and FIG. 2 is an exemplary view intended for explaining a relation between a value coin and a general-purpose electronic coin for a right and value traded in the blockchain-based patent value chain platform according to the exemplary embodiment of the present invention. Furthermore, FIG. 3 is a flow chart showing a crowdfunding service method used by the blockchain-based patent value chain platform.

As illustrated in FIG. 1 to FIG. 3, the present invention provides a platform intended to connect a patentee and an investor with each other and form a value chain for a patent art or an intellectual property idea on the basis of a blockchain, and a crowdfunding service method intended to provide various services through this platform.

In the present invention, the patentee may mean one who has effectively been registered as a patent owner on a patent register with respect to a patent art or intellectual property idea, or one who has a position treated the same as such a right (i.e., one who has a right to use a patent exclusively, or an exclusive right, or one who can exercise the other patents monopolistically and exclusively), or may mean an enterprise or a private person that takes the necessary procedures for patent registration in a patent art or intellectual property idea, and has an exclusive right for possession.

Thereupon the patent art or intellectual property idea results from the creation of a technical idea, has the value of business, holds a mortgage on a development project for commercial production (a merchandising), and means a technical idea whose value can be evaluated.

Thus, a patent value chain platform 100 according to the present invention may largely be divided into a blockchain unit 110 and a funding service unit 120, wherein the blockchain unit 110 may comprise a membership certification part 113, patent value coin issuance part 111, and a general-purpose electronic coin issuance part 112, and the funding service unit 120 may comprise a funding channel management part 121, a service promotion management part 122, and a patent art provision part 123.

The membership certification part 113 treats the admission and certification of a patentee and an investor as members, performs a general certification process from a server, and functions to form an electronic wallet for the utilization of a general-purpose electronic coin and value coin provided additionally in the patent value coin platform.

The electronic wallet may be a software program configured for functioning to manage a personal key for a wallet owned by a person in question, a public key, and an electronic signature for the management of assets so as to cause cryptocurrencies to be exchanged through a blockchain, which can be installed in each terminal unit of the patentee and the investor.

Hereupon the patent value coin issuance part 111 is a cryptocurrency issuance unit configured to issue a value coin which can be used in a scope of all the business carried out in the blockchain-based patent value chain platform.

Furthermore, the patent value coin issuance part 111 is a unit of issuing a value coin that is intended for securing a right and value owned by the patentee and investor and can be used for the right and value only when crowdfunding is performed in the patent value chain platform.

The general-purpose electronic coin is a digital asset that can safely be transferred through the encryption of a public key in a distributed ledger and can cause its right for possession to be easily proved by a hash function, and means cryptocurrency that acts on the distributed ledger based on a blockchain or a DAG (Directed Acyclic Graph) . The general-purpose electronic coin may be exchanged into real currency in a monetary unit, such as a dollar, a euro, a pound, a yuan, a yen, a won, and so on through a cryptocurrency exchange, a market in which the cryptocurrency can be traded.

Furthermore, the value coin for the rights and value is generated and issued on the basis of the blockchain, and is encoded in such a manner that the items of transactions are described in a plurality of distributed ledgers to which a blockchain technology is applied.

This value coin is distinguished from general-purpose electronic coins, cannot be traded through a general electronic money exchange bureau but can be used for a service only provided from the patent value chain platform according to the present invention, and means blockchain-based cryptocurrency that is issued only through a company which manages the patent value chain platform and cannot be exchanged into an electronic coin.

Furthermore, the value coin, which is an electronic coin intended to guarantee a right and value of a patent art when crowdfunding is performed in such a manner that an ID is assigned to each patent art through the funding channel management part 121, may be issued limitedly according to each patent right (patent art), crowdfunding of which is in progress, and may be generated infinitely as much as an amount corresponding to the ID according to each patent art or value of each patent right according to each funding channel through the funding channel management part 121 which carries out crowdfunding according to each kind of the patent rights (as needed).

That is, the value coin, which is furnished to guarantee the right and value of the patent art owned by the patentee, is successively furnished to the patentee as a quantifying amount according to a schedule for development project through the patent art provision part 123 or is furnished in a state of being divided at a predetermined rate. This is limitedly issued according to the value of each patent art through the patent value coin issuance part 111.

Also, the value coin is generated and issued on the basis of a blockchain, and is encoded in such a manner that the items of transactions are described in a plurality of distributed ledgers to which a blockchain technology is applied.

The funding service unit 120 according to the present invention functions to register the patent art, evaluate and quantify value of the patent art, and cause information on the patent art to be shared on a network so as to collect an investor who is interested in the patent art and desires to take part in investment, performs the examination of funding and the management of funding, and fixes an amount of funding.

Thus, the funding service unit 120 may comprise the funding channel management part 121, the service promotion management part 122, and the patent art provision part 123.

The patent art provision part 123 may evaluate the value of business with respect to the patent art registered by the patentee by receiving the support of an expert group online or offline linked with the patent value chain platform, check the schedule for development project enough to realize commercial production, and function to determine a plan for funds of the patentee. Furthermore, it evaluates the patent art according to each item for evaluation provided from the patent value chain platform and quantifies value of the patent art, thereby functioning to calculate an amount of money corresponding to the quantifying value.

The funding channel management part 121 connects the investor and the patentee of the relevant patent art with each other, raises funds to rapidly and effectively develop the patent art and realize commercial production, and takes charge of the distribution of profits occurring from the products between the patentee who owns a right to embody the relevant patent art exclusively and a number of participants who participate in crowd funding that are funding groups according to each patent art targeted for a connection channel for causing them to hold mutual information in common or funding, thereby aiding the issuance of value coins suitable to rights and value by providing the patent art having the patent right of the funding channel with a relevant code.

Furthermore, the service promotion management part 122 supports a service carried out in the patent value chain platform through the value coins. To do so, it also functions to provide the patentee and the investor of a funding channel with various service promotions.

That is, with respect to the service promotions, acts of performing marketing, public relations, an advertisement for the patent art which are intended for the patentee and acts of seeking foreign markets after commercialization, performing marketing for collecting additional investors, and carrying out various online and offline events may be performed, and with respect to expenses required for the service promotions, a general-purpose electronic coin corresponding to the funding channel may be used as expenses for the acts.

More specifically, referring to FIG. 3, a crowdfunding service method according to the present invention comprises: a first step of treating the admission and certification of a patentee as a member, registering a patent art, and quantifying quantitative and qualitative value S100; a second step of furnishing the patentee with a value coin suitable to a right and value according to information on value evaluation and a schedule for development project (i.e., a merchandising) of the patent art through a patent value coin issuance part S200; a third step of sharing patent art information over a network, the information including information on a scale of the lowest amount of money required for embodying the patent art of the patentee, the information on value evaluation, and information on the schedule for development project, and of providing a collected investor with an individual ID and registering an amount of money fixed for funding S300; a fourth step of setting up a funding channel intended for connecting the investor and patentee of the relevant patent art with each other S400; a fifth step of receiving an investment, namely currency corresponding to an amount of funding, in the form of a general-purpose electronic coin through the funding channel from the investor S500; a sixth step of saving the general-purpose electronic coin furnished from the investor in the general-purpose electronic coin issuance part, and furnishing the investor with value corresponding to a fixed rate according to each amount of the general-purpose electronic coin furnished from the investor in the form of a value coin through the patent value coin issuance part S600; a seventh step of furnishing the patentee with a commission for the success of funding at a fixed rate according to an amount of money resulting from value evaluation of the patent art in the form of a general-purpose electronic coin and a value coin through the blockchain unit after completion of funding of the patent art S700; and an eighth step of furnishing the investor with a commission for the success of industrialization corresponding to a fixed rate of an amount invested by the investor in the form of a general-purse electronic coin and a value coin through the blockchain unit after completion of the industrialization of the patent art S800.

The first step S100 shows performing a collection as shown in official online and offline announcement concerning the patent art and intellectual property idea of the patentee, thereby treating the admission and certification of the investor and the patentee as the members of the patent value chain platform in such a manner that the membership certification unit provides the patentee with an individual ID.

At this time, the first step S100 shows performing a process of registering information about the patent art whose right is owned by the patentee exclusively, or an intellectual property idea into the patent art provision part of the patent value chain platform.

Furthermore, in the first step S100, with respect to the patent art registered into the patent art provision part, the value of business may be evaluated by the support of an expert group online and offline linked with the patent value chain platform, a schedule for development project enough to realize commercial production may be checked, and a function to determine a plan for funds of the patentee may be carried out. This value is quantified by the patent art provision part according to items for evaluation provided from the patent value chain platform.

The second step S200 is a step of furnishing the patentee with an amount of money corresponding to the value evaluated and quantified by the patent art provision part according to the value of the patent art and the schedule for the project of development or the project of commercialization in the form of a value coin suitable to the right and value through the patent value coin issuant part.

The third step S300 is a step of sharing the patent art information over the network, the information including information on a scale of the lowest amount of money required for embodying the patent art of the patentee, the information on evaluation value, and information on the schedule for the project of development, and a step of collecting an investor who is interested in the patent art and desires to participate in an investment, and registering an amount of money fixed for funding of the investor.

This is treated by providing the investor with an individual ID through the membership certification part intended to treat the admission and certification of the investor as a member of the patent value chain platform, and the amount of funding is fixed by the funding service unit intended to perform the examination of funding and the management of funding.

The fourth step S400 is a step of connecting the investor and the patentee of the relevant patent art with each other and setting up a funding channel for causing mutual information to be shared.

The funding channel is a connection channel intended for causing the patentee of the relevant patent art and the relevant investor to hold information in common, or a management channel according to each patent art generated and managed from the funding service unit of the patent value chain platform in order to raise funds for rapid and efficient development or commercial production of the patent art and search the distribution of profits generated from the products between the patentee having a right to embody the patent art exclusively and a number of crowdfunding participants who desire to participate in the investment that are funding groups according to each patent art targeted for funding.

That is, the patent value chain platform according to the present invention may set up the funding channel for the patentee and the investor, and thus may issue the value coin to which a code corresponding to the art having the patent right of the funding channel is assigned.

The fifth step S500 is a step of receiving an investment, money corresponding to the amount of funding through the funding channel from the investor in the form of a general-purpose electronic coin.

At this point, the electronic coin, which is a digital asset which can safely be transferred through the encryption of a public key in a distributed ledger, and whose right for possession can easily be proved using a hash function, means cryptocurrency which acts on the distributed ledger based on a blockchain or a DAG (Directed Acyclic Graph).

With respect to this cryptocurrency, new cryptocurrency has continuously appeared since a bitcoin, the first blockchain-based cryptocurrency in the world was created in 2009, and main examples of the cryptocurrency are bitcoin, ethereum, ripple, bitcoin cash, EOS and so on.

The general-purpose cryptocurrency may be exchanged into real money in a monetary unit, such as a dollar, a euro, a pound, a yuan, a yen, a won, and so on through a cryptocurrency exchange bureau that is a market in which the cryptocurrency can be traded.

Thus, in the fifth step S500, the investor may invest a relevant amount of invested through funding in the form of a general-purpose electronic coin, and the patentee may receive the amount invested through funding by the investor for the purpose of an investment in the form of the general-purpose electronic coin through the general-purpose electronic coin issuance part connected to the funding channel. At this time, the patentee who receives the investment may use the general-purpose electronic coin as development funds by having it cashed through the cryptocurrency exchange bureau.

The sixth step S600 is a step of saving the general-purpose electronic coin corresponding to the amount invested through the funding furnished from the investor into the general-purpose electronic issuance part, and furnishing the investor with value corresponding to a fixed rate according to the amount furnished and invested from the investor in the form of a value coin suitable to the right and value through the patent value coin issuance part.

That is, the investor may own the value coin suitable to the value which corresponds to the relevant funding channel, and may receive a support service from the patent value chain platform with the value coin.

Next, the seventh step S700 and the eighth step S800 are steps of furnishing a commission for success concerning the relevant funding in the form of a general-purpose electronic coin or a value coin through the blockchain unit, wherein the seventh step S700 may be configured so as to furnish the patentee with the commission for success of the funding at a fixed rate according to an amount of money resulting from value evaluation of the patent art after completion of the funding for the patent art. The patentee may prepare funds for industrialization of the patent art with the commission for success of the funding.

Furthermore, the eighth step S800 may be configured to furnish the investor with the commission for the success of industrialization corresponding to a fixed rate of the amount invested by the investor after completion of the industrialization of the patent art.

Thus, the patent value chain platform according to the present invention provides the patentee and the investor of the funding channel with various service promotions using the value coins suitable to the right and value corresponding to the funding channel with respect to the patentee and the investor.

The service promotions comprise acts of performing marketing, public relations, and an advertisement for the patent art which are intended for the patentee, and acts of seeking a foreign market and performing marketing to collect additional investors after commercialization which are intended for the investor. Furthermore, with respect to expenses required for the service promotions, the general-purpose electronic coin corresponding to the funding channel may be used as expenses necessary for performing the acts.

Furthermore, the patent value chain platform according to the present invention may carry out various events for the patentee and the investor.

Therefore, thanks to the present invention, it can be easy to perform marketing in foreign countries for a patentee who has no capital strength. That is, it is required to get much capital strength in order to perform marketing really in spite of completion of the development for the patent art, and the launching of products. In particular, in case of marketing in foreign countries, exorbitant expenses are required therefor, and if there is no a line of personal contact, the patentee will never dream of making inroads into the world market. However, thanks to the present invention, investors in foreign countries concerning a relevant patent right may be used as a means to accomplish marketing. For example, when a friend, James by name in U.S.A. invests his money in a relevant patent right, in most cases he makes an investment in the patent right while having some expectations of realizing a profit from the patent art. Needless to say, the situation is that he also owns value of the relevant patent right. He can be regarded as a stockholder concerning the relevant patent right without difficulty. Thus, in order to make a profit as much as value invested, patent products into which the relevant patent right is adopted must be in much demand. Thus, it is expected that circumstances, which show that the patentee performs marketing personally on the spot in U.S.A., a distributor for an exclusive sale is required, and a commercial agent is also required, will occur, and is also expected that it will be possible for the patentee to perform the world marketing even without any investment of funds. It is expected that it will be possible to perform the world marketing in all the countries including Korea, China, U.S.A., Japan, Europe, and so on which receive an investment in the relevant patent right.

Furthermore, the blockchain-based patent channel also carries out crowdfunding, and it is expected that it will be possible to generate data concerning an investment pattern, an interesting item, a model which can be invested, and so on through the analysis of big data by monitoring and analyzing an interesting field according to each investor, an interesting field for an investment according to each age, an amount invested according to each age, an interesting field according to each nation and region, an investment item of concern according to each age, and so on.

As described above, even though the preferable exemplary embodiments have been explained in the detailed description of the present invention, those having ordinary skill in the technical field of the present invention can perform various modifications and alterations from the exemplary embodiments, without departing from the idea and category of the present invention as described in the claims.

## Claims

1. A blockchain-based patent value chain platform, which connects a patentee and an investor with each other and provides a crowdfunding service, comprising:
a blockchain unit comprising: a membership certification part configured to treat admission and certification of the patentee and the investor as members, and function to form an electronic wallet;
a general-purpose electronic coin issuance part configured to issue a general-purpose electronic coin which can be traded through an electronic money exchange bureau and can be used in a scope of all the business carried out in the patent value coin platform; and
a patent value coin issuance part configured to issue a value coin that is intended for securing a right and value owned by the patentee and investor and can be used for the right and value only when crowdfunding is performed in the patent value chain platform; and
a funding service unit comprising: a patent art provision part configured to quantify value of a patent art, thereby calculating an amount of money corresponding to the quantifying value;
a funding channel management part configured to connect the investor and the patentee with each other, cause them to hold mutual information in common, and provide a code corresponding to the patent art; and
a service promotion management part configured to provide the patentee and the investor of a funding channel with various service promotions.

2. A crowdfunding service method, which is used by the blockchain-based patent value chain platform, comprising:
a first step of treating the admission and certification of a patentee as a member and registering a patent art;
a second step of furnishing the patentee with a value coin suitable to a right and value according to information on value evaluation and a merchandising of the patent art through a patent value coin issuance part;
a third step of sharing patent art information over a network, the information including information on a scale of the lowest amount of money predetermined for embodying the patent art of the patentee, and the information on value evaluation, and information on a schedule for development project;
a fourth step of setting up a funding channel between the previously collected investor and the patentee;
a fifth step of receiving, as an investment, currency corresponding to an amount of funding in the form of a general-purpose electronic coin through the funding channel from the investor;
a sixth step of saving the general-purpose electronic coin furnished from the investor into a general-purpose electronic coin issuance part, and furnishing the investor with value corresponding to a fixed rate according to each amount of the general-purpose electronic coin furnished from the investor in the form of a value coin through the patent value coin issuance part;
a seventh step of furnishing the patentee with a commission for the success of funding at a fixed rate according to an amount of money resulting from value evaluation on the patent art in the form of a general-purpose electronic coin or a value coin through a blockchain unit after completion of funding of the patent art; and
an eighth step of furnishing the investor with a commission for the success of industrialization corresponding to a fixed rate of an amount invested by the investor in the form of a general-purse electronic coin or a value coin through the blockchain unit after completion of the industrialization of the patent art.
